# EUROPÄISCHE PATENTANMELDUNG

(11) **EP 3 001 162 A1**
(43) Veröffentlichungstag der Anmeldung: **30.03.2016**
(21) Anmeldenummer: 14003339.0
(22) Anmeldetag: 27.09.2014
(51) Int. Cl.: G01H 3/12

(54) **Schallquellenvisualisierungssystem und Umwandlungseinheit**

(71) Anmelder: CAE Software & Systems GmbH, 33334 Gütersloh (DE)
(72) Erfinder: Zurmühlen, Nico, 33335 Gütersloh (DE); Kohn, Kai-Uwe, 33378 Rheda-Wiedenbrück (DE)
(74) Vertreter: Thielking & Elbertzhagen Patentanwälte Partnerschaft mbB

(57) **Zusammenfassung**

Ein Schallquellenvisualisierungssystem (1) weist ein Mikrophonarray (10) auf. Das Mikrophonarray (10) weist eine Platine mit einer Mehrzahl auf einer Platine in einer Ebene angeordnete Mikrophone zum Empfangen von akustischen Signalen auf. Das Schallquellenvisualisierungssystem (1) weist ferner eine an der Platine angeordnete Kamera (20), die so ausgerichtet ist, dass sie optische Signale aus derselben Richtung empfangen kann, aus der die von den Mikrophonen empfangenen akustischen Signale kommen, auf. Ferner weist das Schallquellenvisualisierungssystem (1) eine Rechnereinheit (30) auf, welche dazu eingerichtet ist, die von der Kamera (20) und dem Mikrophonarray (10) aufgenommenen optischen und akustischen Signale auszuwerten und in Anzeigedaten umzuwandeln, und schließlich eine Anzeigeeinrichtung (40), die mit der Rechnereinheit (30) kommuniziert und dazu ausgelegt ist, die von der Rechnereinheit (30) erzeugten Anzeigedaten darzustellen. Die Anzeigeeinrichtung (40) ist an der Platine des Mikrophonarrays (10) angebracht.

## Beschreibung

Die Erfindung betrifft ein Schallquellenvisualisierungssystem nach dem Oberbegriff des Anspruchs 1.

Entsprechende Systeme, die auch akustische Kameras genannt werden, dienen unter anderem der Ortung und Sichtbarmachung von Schallquellen. Dies kann zum Beispiel eingesetzt werden, um etwa die Position von Geräuschquellen genau bestimmen zu können. Dazu wird das System in Richtung einer zu ortenden Schallquelle ausgerichtet und es werden akustische Signale und ein Videosignal aufgenommen und die akustischen Signale ortsaufgelöst über das Videobild gelegt. Z.B. kann so bei Motorgeräuschen in Fahrzeugen die Quelle der Geräusche geortet werden.

In EP 2 746 737 A1 ist eine akustische Kamera beschrieben, bei der eine Anzahl MEMS-Mikrophone in einer Ebene auf einer Leiterplatine (PCB) in einer festen Anordnung (Array) angeordnet sind. Die Platine mit den Mikrophonen stellt eine akustische Messvorrichtung dar, welche mit einer Datensammeleinrichtung, einer Kamera und einer Rechnereinheit sowie eine Anzeigeeinrichtung verbunden ist. Rechnereinheit und Anzeigeeinheit sind bei dem bekannten System immer externe Komponenten, da die von der akustischen Kamera gesammelten Daten für auf eine Platine integrierte Rechnereinheiten zu komplex sind. Zudem befinden die Anzeigeeinrichtungen, die am externen Rechner hängen, aus diesem Grund auch an einem von der akustischen Messvorrichtung entfernten Ort, so dass die genaue Positionierung der akustischen Messvorrichtung erschwert wird.

Aufgabe der vorliegenden Erfindung ist es daher, ein Schallquellenvisualisierungssystem der eingangs genannten Art anzugeben, welches die geschilderten Nachteile nicht aufweist.

Gelöst wird diese Aufgabe durch ein Schallquellenvisualisierungssystem mit den Merkmalen des Anspruchs 1, sowie eine Umwandlungseinheit mit den Merkmalen des Anspruchs 10, welche etwa TCP/IP-Daten in HDMI-Daten umwandeln kann.

Das erfindungsgemäße Schallquellenvisualisierungssystem zeichnet sich durch eine besonders kompakte, hochintegrierte Bauform aus, bei der die Anzeigeeinrichtung an der Platine des Mikrophonarrays angebracht ist. Dies wird insbesondere ermöglicht durch die erfindungsgemäße Umwandlungseinheit gemäß Anspruch 10. Auf diese Weise können die von dem Schallquellenvisualisierungssystem aufgenommenen Rohdaten an die externe Rechnereinheit weiter gegeben und dort ausgewertet in Bilddaten an die Anzeigeeinrichtung zurück übertragen werden. So ist für die Kommunikation mit externen Geräten lediglich eine TCP/IP-Verbindung (drahtgebunden oder ggf. auch drahtlos) erforderlich, weitere Kommunikationsleitungen können entfallen. Auf diese Weise ist es auch möglich, z.B. leistungsfähige PCs oder PC Cluster zu nutzen, die derzeit nicht in kompakter Bauform erhältlich sind. Die Anzeigeeinrichtung ist erfindungsgemäß aber direkt als Einheit mit dem Mikrophonarray verbunden, so dass insbesondere die Ausrichtung des Schallquellenvisualisierungssystems durch das Zusammenführen der Kamera und der Anzeigeeinrichtung vereinfacht wird, da die Bedienperson beim Betrachten der Anzeigeeinrichtung "durch den Sucher der Kamera" schaut.

Handelsübliche Displays können bei der erfindungsgemäßen Anordnung nicht über Standard Display Ports wie z.B.: VGA, DVI oder HDMI an die Rechnereinheit angeschlossen werden, da diese sich in der Regel in einiger Entfernung (bis zu 100 Meter entfernt) befindet und herkömmliche Videokabel über diese Entfernung keine störungsfreie Bildübertragung mehr gewährleisten können. Die erfindungsgemäße Umwandlungseinheit ist daher bevorzugt zwischen die Rechnereinheit und die Anzeigeeinheit geschaltet. Die Umwandlungseinheit ist dabei an der Platine des Mikrophonarrays angeordnet. Durch die Befestigung an der Platine werden zum einen überflüssige externe Kabel vermieden, die nur für Anzeigeeinrichtung und Bedienung des Systems benötigt würden.

Bevorzugt ist die Umwandlungseinheit ein TCP/IP zu HDMI Adapter, der die Rechnereinheit mit der Anzeigeeinrichtung verbindet und die Bilddaten an die Anzeigeeinrichtung übergibt. Dazu ist bevorzugt vorgesehen, dass die Umwandlungseinheit so ausgelegt ist, dass sie Anzeigedaten über ein TCP/IP-Protokoll von der Rechnereinheit empfangen werden kann. Weiter kann zusätzlich vorgesehen sein, dass die Umwandlungseinheit so ausgelegt ist, dass sie - insbesondere über das TCP/IP-Protokoll - bidirektional mit der Rechnereinheit kommunizieren kann. Auf diese Weise kann die Anzeigeeinrichtung Eingabeinformationen des Benutzers - z.B. über eine berührungsempfindliche Anzeigeeinrichtung - an den Rechner zurück geben. Die Anzeigeeinrichtung kommuniziert so mit der Rechnereinheit in beiden Richtungen über ein TCP/IP -Protokoll.

Zur Verbindung der Anzeigeeinrichtung mit der Umwandlungseinrichtung können die üblichen Ports für Videosignale an der Umwandlungseinrichtung vorgesehen sein. Dazu kann insbesondere vorgesehen sein, dass die Umwandlungseinheit dazu ausgelegt ist, von der Rechnereinheit übermittelte Anzeigedaten in ein HDMI-Signal, DVI-Signal oder VGA-Signal umzuwandeln und an die Anzeigeeinrichtung zu übertragen.

Nach einer bevorzugten Ausführungsform kann die Umwandlungseinheit dazu ausgelegt sein, von der Anzeigeeinrichtung erzeugte, insbesondere über ein USB-Signal, von der Anzeigeeinrichtung an die Umwandlungseinheit übertragene Eingabedaten zu erfassen und - insbesondere über TCP/IP - an die Rechnereinheit zu übertragen. Zum Zurückgeben von Bedieninformationen von der Anzeigeeinrichtung an die Umwandlungseinrichtung wird in diesem Fall eine USB-Schnittstelle genutzt.

In diesem Fall lässt sich ein besonders kompaktes und gegenüber äußeren Einflüssen weitgehend unanfälliges Schallquellenvisualisierungssystem realisieren, bei dem nur eine TCP/IP Verbindung zwischen Rechner und mobiler Einheit (Mikrophonarray, Kamera, Anzeigeeinrichtung, Datenakquisesystem) bestehen muss, um Rohdaten, berechnete Ergebnisse, Displayinformationen und Bedienerinformationen kommunizieren zu können.

Nach einer vorteilhaften Ausführungsform ist vorgesehen, dass die Platine des Mikrophonarrays auf der der Empfangsseite abgewandten Seite ein Gehäuse aufweist, in welchem elektrische und/oder elektronische Komponenten untergebracht sind. Weiter kann die Anzeigeeinrichtung an dem Gehäuse angebracht sein. Die Anzeigeeinrichtung kann in diesem Fall auch als Gehäuserückwand dienen.

Die Rechnereinheit kann direkt an der Platine des Mikrophonarrays angebracht oder eine externe Rechnereinheit sein.

Die erfindungsgemäße Umwandlungseinheit dient zur Kopplung der Rechnereinheit mit einer Anzeigeeinrichtung und eignet sich bevorzugt zur Verwendung in einem oben beschriebenen Schallquellenvisualisierungssystem. Die Umwandlungseinheit weist dazu eine TCP/IP-Schnittstelle zur Kommunikation, insbesondere bidirektionalen Kommunikation, mit der Rechnereinheit sowie eine HDMI- oder andere Video-Schnittstelle zur Kommunikation mit einer Anzeigeeinheit auf. Auf diese Weise kann die Umwandlungseinheit TCP/IP-Informationen direkt in Videobilder umwandeln, was die Kommunikation zwischen externem Rechner und Anzeigeeinrichtung auch über längere Entfernungen vereinfacht.

Weiter weist die Umwandlungseinheit bevorzugt eine Empfangsschnittstelle zum Empfangen von Eingabedaten von der Anzeigeeinrichtung auf. Dabei kann es sich z.B. um eine USB-Schnittstelle handeln. Auf diese Weise kann der Benutzer mit an der Umwandlungsschnittstelle angeschlossenen Geräten - z.B. der Rechnereinheit - interaktiv kommunizieren.

Weiter kann vorgesehen sein, dass die Umwandlungseinheit ein erstes Umwandlungsmittel aufweist, welches dazu ausgelegt ist, über TCP/IP empfangene Anzeigesignale in ein HDMI-Signal umzuwandeln. Auf diese Weise lassen sich von der Rechnereinheit kommende Bild-Signale in hoher Qualität auf der Anzeigeeinrichtung darstellen.

Weiter kann die Umwandlungseinheit ein zweites Umwandlungsmittel aufweisen, welches dazu ausgelegt ist, USB-Eingabedaten in TCP/IP-Eingabedaten umzuwandeln. Dies ermöglicht eine besonders einfache Interaktion eines Benutzers mit der Rechnereinheit.

Die Erfindung wird nachfolgend anhand der in den Figuren 1 bis 5 gezeigten Ausführungsbeispiele näher erläutert.
- Figur 1 -: zeigt eine schematische Schnittansicht einer ersten Ausführungsform des erfindungsgemäßen Schallquellenvisualisierungssystems,
- Figur 2 -: zeigt ein Datenflussdiagramm der ersten Ausführungsform,
- Figur 3 -: zeigt eine schematische Ansicht der zweiten Ausführungsform des erfindungsgemäßen Schallquellenvisualisierungssystems,
- Figur 4 -: zeigt ein Datenflussdiagramm der zweiten Ausführungsform,
- Figur 5 -: zeigt ein Funktionsdiagramm der erfindungsgemäßen Umwandlungseinheit.

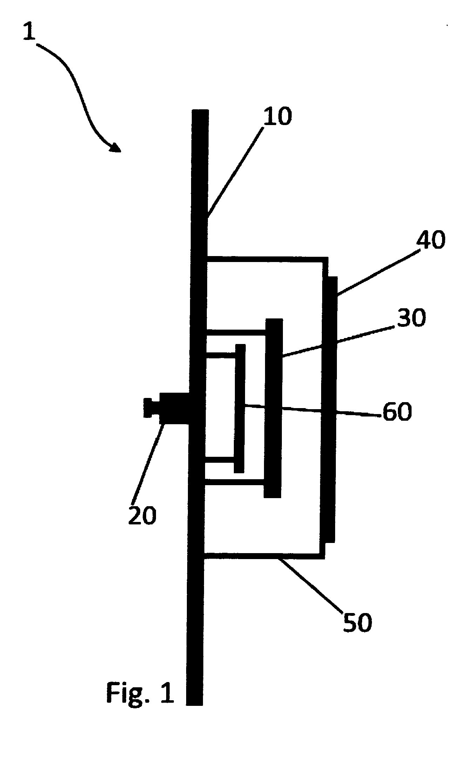

Das in Figur 1 dargestellte Schallquellenvisualisierungssystem 1 weist eine Platine 10 auf, auf der nicht dargestellte Mikrophone in einer ebenen Anordnung in Form eines Arrays angeordnet sind. Die Platine 10 weist auch Leiterbahnen auf, die die von den Mikrophonen eingefangenen akustischen Signale an eine Datensammeleinrichtung 60 weiter leiten, die auf der Rückseite (d.h. der Empfangsseite abgewandten Seite) der Platine 10 angeordnet ist. Weiter ist empfangsseitig eine Kamera 20 angeordnet, welche ebenfalls mit der Datensammeleinrichtung 60 gekoppelt ist. Bevorzugt ist die Datensammeleinrichtung 60 von einem Gehäuse 50 geschützt. Weiter ist an der Platine 10 (bevorzugt an der Rückwand des Gehäuses 50) eine Anzeigeeinrichtung 40 vorgesehen, auf der die von der Kamera 20 aufgenommenen und die von einer Rechnereinheit 30 erzeugten Bilddaten angezeigt werden. Im gezeigten Beispiel ist die Rechnereinheit 30 im Gehäuse 50 integriert, d.h. sie ist ebenfalls an der Platine 10 angebracht. Bei dieser Ausführungsform ist eine sehr kompakte Bauweise möglich, die lediglich eine Spannungsversorgung benötigt.

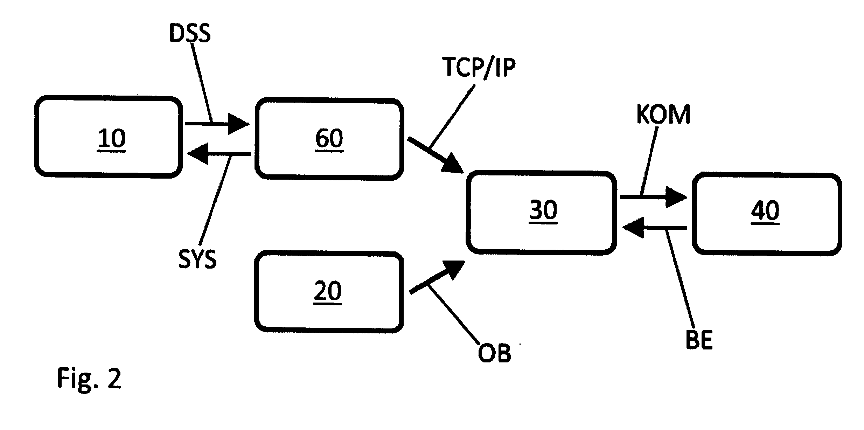

Die Funktionsweise des Schallquellenvisualisierungssystems 1 ist in Figur 2 skizziert. Das Mikrophonarray 10 produziert aus den empfangenen Signalen einer Schallquelle Digitalsignale (DSS), welche an die mit dem Mikrophonarray 10 verbundene Datensammeleinrichtung 60 weiter geleitet werden. Über ein TCP/IP-Protokoll werden die von der Datensammeleinrichtung 60 empfangenen Daten an die Rechnereinheit 30 zur Auswertung weiter geleitet. Ebenso werden die von der Kamera 20 empfangenen Bildsignale OB an die Rechenreinheit zur Auswertung weiter geleitet. Die Rechnereinheit erzeugt nun ein Bild der empfangenen akustischen Signale und legt diese über das Kamerabild. Diese so erzeugten Daten werden an die Anzeigeeinrichtung 40 über einen Kommunikationsschnittstelle KOM weiter geleitet und angezeigt. Optional kann auch eine Benutzerschnittstelle BE vorgesehen sein, über die der Benutzer - z.B. über ein Touchdisplay oder ein anderes ggf. externes Bedienelement - interaktiv Daten eingeben kann, z.B. zur Vergrößerung eines Bildausschnitts, Absenden eines Druckbefehls oder von Kontrollbefehlen an die Rechnereinheit 30 usw.

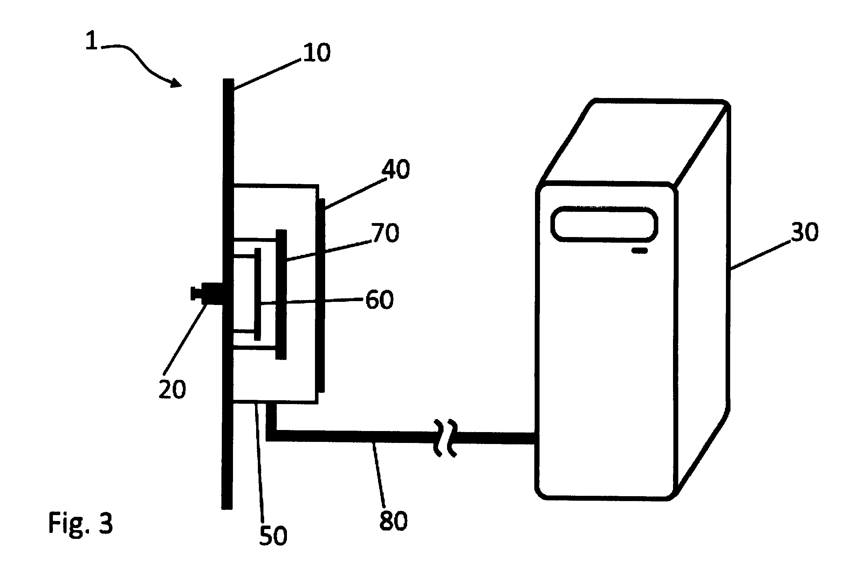

Die in Figur 3 gezeigte Ausführungsform des Schallquellenvisualisierungssystems 1 unterscheidet sich von der zuvor beschriebenen Ausführungsform dadurch, dass die Rechnereinheit 30 extern über eine Kommunikationsleitung 80 (ggf. drahtlos) mit der Platine des Mikrophonarrays verbunden und nicht an der Platine 10 direkt oder über Befestigungselemente angebracht ist. Auf diese Weise kann eine wesentlich leistungsfähigere Rechnereinheit 30 genutzt werden, um die komplexen Datenmengen, die das System generiert, möglichst schnell und hochauflösend zu verarbeiten. Zum Anschluss der Anzeigeeinrichtung 40 ist (bevorzugt im Gehäuse 50) eine erfindungsgemäße Umwandlungseinheit 70 vorgesehen, welche einen Adapter darstellt, der die vom Rechner 30 kommenden TCP/IP-Daten in Bilddaten übersetzt.

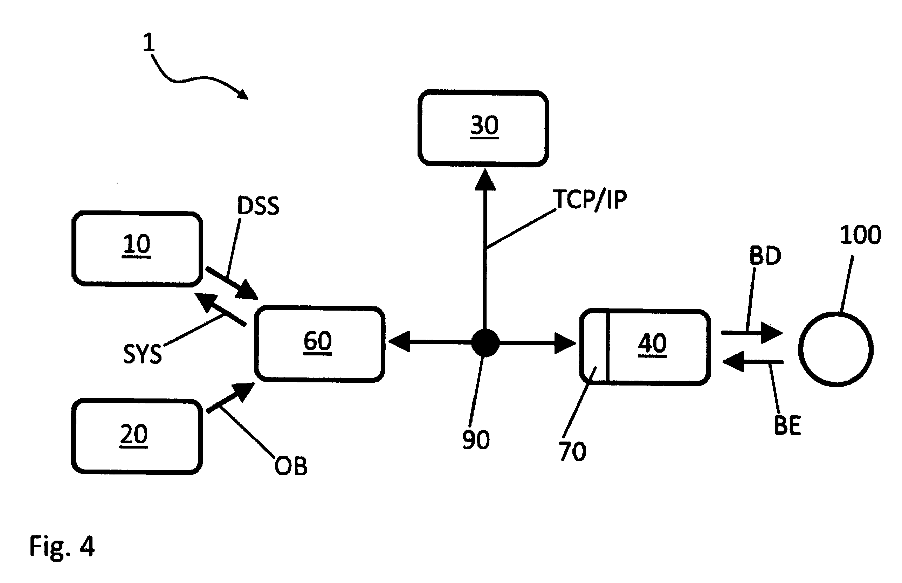

Wie im in Figur 4 gezeigten Flussdiagramm zu erkennen, werden die vom Mikrophonarray 10 erzeugten akustischen Signale in Digitalsignale DSS umgewandelt (die A/D-Wandlung findet im gezeigten Beispiel direkt in der Mikrophonkapsel der Mikrophone statt, kann aber auch durch einen AD-Wandler auf der Platine 10 geschehen) und an die Datensammeleinrichtung 60 weiter geleitet. Ebenso kann dies mit den Bilddaten OB geschehen, die die Kamera 20 aufnimmt. Alternativ kann es sich bei der Kamera 20 um eine Ethernet-Kamera handeln, welche direkt über TCP/IP mit der Recheneinheit 30 kommuniziert. Die Bilder müssen in diesem Fall nicht vorher zur Datensammeleinrichtung 60 gesendet werden. Die Datensammeleinrichtung 60 kommuniziert nun über ein TCP/IP-Netzwerk, angedeutet durch den Switch 90, mit der Rechnereinheit 30, welche die gesammelten Bild- und Ton-Daten auswertet, wie bereits oben zur ersten Ausführungsform beschrieben. Die ausgewerteten Daten werden über das IP-Netzwerk 90 an die Anzeigeeinrichtung 40 weitergegeben und angezeigt. Dazu ist zwischen IP-Netzwerk 90 und Anzeigeeinrichtung 40 ein Adapter 70 geschaltet, welcher eine Ausführung der erfindungsgemäßen Umwandlungseinheit darstellt. Der Benutzer 100 kann die auf der Anzeigeeinheit 40 angezeigten Bilder BD sehen und - ggf. über ein Touchdisplay oder ein anderes ggf. externes Bedienelement - interaktiv Daten BE eingeben (wie oben beschrieben).

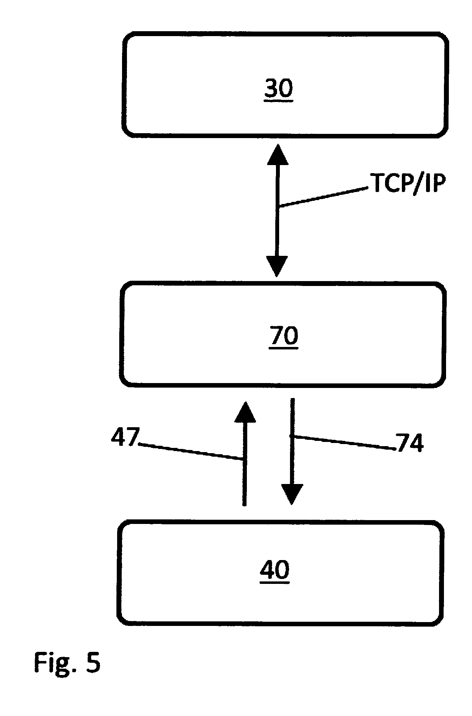

Die erfindungsgemäße, als Adapter wirkende Umwandlungseinheit 70 ist in dem Funktionsdiagramm der Figur 5 schematisch dargestellt. Der Adapter 70 weist eine TCP/IP-Schnittstelle auf, um mit dem Netzwerk bzw. der daran hängenden Rechnereinheit 30 zu kommunizieren. Auf diesem Wege werden Bildinformationen (z.B. im jpeg-Format) an den Adapter 70 übergeben oder Bedieninformationen (Benutzerkommandos wie Klickpositionen eines Touchpads) an die Rechnereinheit 30 weiter geleitet. Auf der anderen Seite weist der Adapter 70 eine Displayschnittstelle 74, bevorzugt eine HDMI-Schnittstelle, auf, um die einkommenden TCP/IP-Daten, die Bildinformationen enthalten, in auf der Anzeigeeinrichtung 40 darstellbare Daten umzuwandeln. Weiter kann auch eine, hier als USB-Schnittstelle ausgebildete, Bedienerschnittstelle 47 am Adapter 70 vorgesehen sein, über die Benutzerkommandos von der Anzeigeeinrichtung 40 an den Adapter 70 und dann durch diesen umgewandelt in IP-Daten an den Rechner 30 weiter gegeben werden können.

Der erfindungsgemäße Adapter ist kompakt aufgebaut und deshalb sehr gut in das Gehäuse 50 oder auch zusammen mit der Anzeigerichtung 40 in einem eigenem Displaygehäuse integrierbar. Der Adapter 70 baut dabei eine Verbindung zur Rechnereinheit 30 auf, empfängt Bildinformationen in Form von üblichen Bilddaten (z.B. jpeg), dekomprimiert Bilddaten, erzeugt ein (hochauflösendes) Signal als Bilddaten, z.B. HDMI, empfängt eingegebene Benutzerkommandos (z.B. aus der Anzeigeeinrichtung 40) über übliche Peripheriegeräteschnittstellen (z.B. USB) und sendet solche Benutzerkommandos über TCP/IP an die Rechnereinheit 30.

## Patentansprüche

1. Schallquellenvisualisierungssystem (1), aufweisend:
- ein Mikrophonarray (10), welches eine Platine mit einer Mehrzahl auf einer Platine in einer Ebene angeordnete Mikrophone zum Empfangen von akustischen Signalen aufweist,
- eine an der Platine angeordnete Kamera (20), die so ausgerichtet ist, dass sie optische Signale aus derselben Richtung empfangen kann, aus der die von den Mikrophonen empfangenen akustischen Signale kommen,
- eine Rechnereinheit (30), welche dazu eingerichtet ist, die von der Kamera (20) und dem Mikrophonarray (10) aufgenommenen optischen und akustischen Signale auszuwerten und in Anzeigedaten umzuwandeln, und
- eine Anzeigeeinrichtung (40), die mit der Rechnereinheit (30) kommuniziert und dazu ausgelegt ist, die von der Rechnereinheit (30) erzeugten Anzeigedaten darzustellen,
**dadurch gekennzeichnet,**
**dass** die Anzeigeeinrichtung (40) an der Platine des Mikrophonarrays (10) angebracht ist.

2. Schallquellenvisualisierungssystem (1) nach Anspruch 1,
**dadurch gekennzeichnet,**
**dass** zwischen die Rechnereinheit (30) und die Anzeigeeinheit (40) eine Umwandlungseinheit (70) geschaltet ist, welche an der Platine des Mikrophonarrays (10) angeordnet ist.

3. Schallquellenvisualisierungssystem (1) nach Anspruch 2,
**dadurch gekennzeichnet,**
**dass** die Umwandlungseinheit (70) so ausgelegt ist, dass sie Anzeigedaten über ein TCP/IP-Protokoll von der Rechnereinheit (30) empfangen kann.

4. Schallquellenvisualisierungssystem (1) nach Anspruch 2,
**dadurch gekennzeichnet,**
**dass** die Umwandlungseinheit (70) so ausgelegt ist, dass sie über das TCP/IP-Protokoll bidirektional mit der Rechnereinheit (30) kommunizieren kann.

5. Schallquellenvisualisierungssystem (1) nach einem der Ansprüche 2 bis 4,
**dadurch gekennzeichnet,**
**dass** die Umwandlungseinheit (70) dazu ausgelegt ist, von der Rechnereinheit (30) übermittelte Anzeigedaten in ein HDMI-Signal, VGA-Signal oder DVI-Signal umzuwandeln und an die Anzeigeeinrichtung (40) zu übertragen.

6. Schallquellenvisualisierungssystem (1) nach einem der Ansprüche 2 bis 5,
**dadurch gekennzeichnet,**
**dass** die Umwandlungseinheit (70) dazu ausgelegt ist, von der Anzeigeeinrichtung (40) erzeugte, insbesondere über ein USB-Signal, von der Anzeigeeinrichtung (40) an die Umwandlungseinheit (70) übertragene Eingabedaten zu erfassen und über TCP/IP an die Rechnereinheit (30) zu übertragen.

7. Schallquellenvisualisierungssystem (1) nach einem der vorigen Ansprüche,
**dadurch gekennzeichnet,**
**dass** die Platine des Mikrophonarrays (10) auf der der Empfangsseite abgewandten Seite ein Gehäuse (50) aufweist, in welchem elektrische und/oder elektronische Komponenten untergebracht sind.

8. Schallquellenvisualisierungssystem (1) nach Anspruch 7,
**dadurch gekennzeichnet,**
**dass** die Anzeigeeinrichtung (40) am Gehäuse (50) angebracht ist.

9. Schallquellenvisualisierungssystem (1) nach Anspruch 1,
**dadurch gekennzeichnet,**
**dass** die Rechnereinheit (30) an der Platine des Mikrophonarrays (10) angebracht oder eine nicht am Mikrophonarray (10) direkt oder indirekt angebrachte externe Rechnereinheit (30) ist.

10. Umwandlungseinheit (70) zur Kopplung einer Rechnereinheit (30) mit einer Anzeigeeinrichtung (40), insbesondere zur Verwendung in einem Schallquellenvisualisierungssystem (1) nach einem der vorigen Ansprüche, mit einer TCP/IP-Schnittstelle zur Kommunikation mit einer Rechnereinheit (30) sowie mit einer HDMI-Schnittstelle (74) zur Kommunikation mit einer Anzeigeeinheit (40).

11. Umwandlungseinheit (70) nach Anspruch 10,
**dadurch gekennzeichnet,**
**dass** sie ferner eine Empfangsschnittstelle (47) zum Empfangen von Eingabedaten von der Anzeigeeinrichtung (40), insbesondere eine USB-Schnittstelle, aufweist.

12. Umwandlungseinheit (70) nach Anspruch 10 oder 11,
**dadurch gekennzeichnet,**
**dass** die TCP/IP-Schnittstelle zur bidirektionalen Kommunikation der Umwandlungseinheit (70) mit der Rechnereinheit (30) ausgelegt ist.

13. Umwandlungseinheit (70) nach einem der Ansprüche 10 bis 12,
**dadurch gekennzeichnet,**
**dass** sie ein erstes Umwandlungsmittel aufweist, welches dazu ausgelegt ist, über TCP/IP empfangene Anzeigesignale in ein HDMI-Signal umzuwandeln.

14. Umwandlungseinheit (70) nach einem der Ansprüche 10 bis 13,
**dadurch gekennzeichnet,**
**dass** sie ein zweites Umwandlungsmittel aufweist, welches dazu ausgelegt ist, USB-Eingabedaten in TCP/IP-Eingabedaten umzuwandeln.
